# EUROPEAN PATENT SPECIFICATION

(11) **EP 3 256 753 B1**
(45) Date of publication and mention of the grant of the patent: **30.01.2019**
(21) Application number: 17705885.6
(22) Date of filing: 17.02.2017
(51) Int. Cl.: F16F 15/32

(54) **SELF-ADHESIVE BALANCING WEIGHT FOR A VEHICLE WHEEL**
SELBSTKLEBENDES AUSWUCHTGEWICHT FÜR EIN FAHRZEUGRAD
POIDS D'ÉQUILIBRAGE AUTOCOLLANT POUR UNE ROUE DE VÉHICULE

(30) Priority: 19.02.2016 EP 16156457
(43) Date of publication of application: 20.12.2017
(73) Proprietor: WEGMANN automotive GmbH, 97209 Veitshöchheim (DE)
(72) Inventor: HORNUNG, Thomas, 97072 Würzburg (DE); SCHWENOLD, Hubert, 72474 Winterlingen-Harthausen (DE); KUHN, Benedikt, 97261 Güntersleben (DE); SCHENKER, Simon, 97247 Eisenheim (DE)
(74) Representative: Lohr, Jöstingmeier & Partner
(86) International application number: PCT/EP2017/053689
(87) International publication number: WO 2017/140888

(56) References cited:
- WO-A1-99/00609
- WO-A1-2015/134426
- US-A- 2 522 039

## Description

### Field of the invention

The invention relates to a self-adhesive balancing weight, which may be attached to the rim of a wheel of a vehicle for balancing the wheel.

### Description of the related art

The contact surface of self-adhesive balancing weights generally is formed so as to accurately fit to the counter surface of the wheel rim holding the weight to provide as much contact surface and thereby adhesive surface area as possible in order to ensure safe fixation. As the rim profiles of different types of wheels - coming from different wheel manufactures for instance - differ in a wide range, a great number of different balancing weights has to be kept on stock. Particularly, the counter-surface of aluminum wheel rims, to which the balancing weights have to be fixed, often are concave-convex shaped so that accurate adaptation of balancing weights is difficult.

WO 99/00609 discloses self-adhesive balancing weights the contact surfaces of which are exactly complementary to the shape of the counter-surface of the respective wheel rim so that they could not be used with wheel rims of different shape.

US 2007/0108834 A1 discloses a balancing weight body filled with mass material particles.

FR 1.309.852 discloses a balancing weight with a curved attachment section.

WO 2015/134426 A1 discloses a balancing weight tape which can be glued to the rim of a wheel.

There is a large number of different rim geometries in the market. Furthermore, there are significant mechanical tolerances in the rims which may be in an order of 1 mm.

For reliably attaching balancing weights to a rim, there are two basic concepts. Self-adhesive balancing weights usually have a planar back surface which is designed to adhere to an at least essentially planar surface which is curved only around the rotational axis of the wheel. Accordingly, the self-adhesive balancing weights have to be bent only in one axis. The second type of balancing weights are clip-on balancing weights which are held to the rim by a spring clip. These balancing weights usually are held in an outer groove of the rim and therefore must at least roughly be adapted to the contour of the groove. Due to the large number of different grooves, at least a significant number of differently formed balancing weights is required.

### Summary of the invention

The problem to be solved by the invention is s to provide self-adhesive balancing weights which fit to several different rim shapes. Therefore only a small number of balancing weights or only a single type of balancing weights should fit to a broad variety of rims.

Solutions of the problem are described in the independent claims. The dependent claims relate to further improvements of the invention.

For finding a solution of the problem, a large number of rims has been analyzed and checked for possible locations for mounting of balancing weights. A balancing weight which fits to most rims on the market, provides the following features.

A balancing weight has a top surface which basically may have any shape, but preferably is a planar surface. Approximately opposed thereto is a bottom surface which is preferably designed to be held to the rim by means of a self-adhesive tape. The self-adhesive tape preferably is attached to the bottom surface or parts thereof. In an alternate embodiment, the balancing weight may be held to the rim by means of clip. Furthermore it is preferred, if the balancing weight has at least one or two extensions by which the balancing weight may be held by a robot or a person, when the balancing weight is attached to a rim.

The bottom surface, which also serves as an attachment surface has at least two curved sections with different radii. There is a first curved section having a first radius and a second curved section having a second radius. Between the curved sections and the top surface of the balancing weight or the extensions of the balancing weight, there may be an approximately straight or a plurality of straight sections, which preferably have a comparatively large curve radius, significantly larger than the second curved section, or are straight. Although in a preferred embodiment, the first curved section is next to the second curved section, in an alternate embodiment, there may be straight section between the first curved section and the second curved section. At the first curved section, opposite to the second curved section, there may be a third curved section.

The first curved section has a smaller radius than the second curved section. The first and/or the second curved sections may have notches or recesses for further enhancing fixation to the rim. The radius of the third curved section may be smaller than the radius of the first curved section, but it is preferred to have a larger radius. Preferably, the radius of the third curved section is the same as the radius of the second curved section, while both are larger than the radius of the first curved section.

Preferably, a recess is provided within the first curved section. The recess may have the shape of a flat blind hole. It may be circular, rectangular or of any other shape. The cross section of the recess may be between 50% and 10% of the surface area of the first curved section. The depth may be between 1mm and half the thickness of the balancing weight. The recess results in a lower surface area of the first curved section. Due to the lower surface area, the total force to compress an adhesive tape located at the first curved section is lower compared to the second and the third section. This helps to adapt the balancing weight to rims, if the shape of the rim is such, that the distance between the rim and the first section is less than the distance between the rim and the second and third sections, requiring a higher compression at the first curved section.

It is further preferred, if the length of the second section is larger than the length of the first section. It is furthermore preferred, if the length of the third section is smaller than the length of the first section.

According to the invention, the first, second and third curved sections are convex shaped.

It is preferred, if the self-adhesive tape is on the first curved section and on the second curved section. This self-adhesive tape preferably covers the first curved section and the second curved section in a tangential direction. Most preferably the self-adhesive tape completely covers the first curved section and the second curved section in a tangential direction.

There may be one or two further curved sections limiting the bottom surface against the top side. These are different from the first curved section and the second curved section.

Most preferably, the first and second curved sections form at least a contact line with a rim. There is a contact over the length of the balancing weight at these contact points. There may even be a larger contact area if the curvature of the rim is very similar to the curve of the bottom surface of the balancing weight. If there are only small deviations, or a small variations in distance between the rim and the balancing weight, these will be compensated by the adhesive tape. In an embodiment with balancing weights preferably for aluminum rims, there may be at least one contact line or even a contact area with at least one of the straight sections.

Herein the terms contact points and contact lines are used. In a sectional view of the balancing weights, the area of contact between the balancing weight and a rim may look like a point. Actually, there is a projection of the contact point forming a contact line in the direction of the length of the balancing weight. In this document both terms contact point and contact line are used as equivalent as described above.

The both curved sections will result in at least two contact points with the rim of a large variety of balancing weights, which results in a sufficient contact and a sufficient adhesive force to the rim. Due to the curves of the curved sections, the distance to the rim in case of any deviations of the form of the rim is slightly decreasing. Such a slightly decreasing distance may easily be absorbed by a self-adhesive tape between the balancing weight and the rim, thus resulting in a comparatively large section in which adhesive forces apply. Preferably, the radius of the first curved section is about half of the radius of the second curved section. Preferably, the first radius is about 4 mm while the second radius is about 8 mm. These values may be modified in a range of ± 50%, preferably within ± 30% and most preferably within ± 10%.

Preferably, the radius of the first curved section is about 1/5 of the radius of the second curved section. Preferably, the first radius is about 1.8 mm while the second radius is about 9 mm. These values may be modified in a range of ± 50%, preferably within ± 30% and most preferably within ± 10%. It is further preferred, if there are two straight sections between each of the curved sections and the top surface. Preferably the angle between these straight sections is 90 degrees. The angle may vary for less than ± 30 degrees, preferably less than ± 20 degrees and most preferably less than ± 10 degrees. Preferably the first radius is 1 mm less than the second radius which is 8 mm with a tolerance of these values of ± 50 % and a preferred tolerance of 30%.

Preferably, the center axis for the first radius goes through the balancing weight body, while it is preferred, that the center axis for the second radius is outside of the balancing weight body.

The balancing weights may be made from any material as known from the art. The material preferably comprises zinc or steel. It is further preferred, if the balancing weights have at least one inlay of a ferromagnetic material, e.g. like iron or steel, which would allow handling by a magnetic picking head.

In a preferred embodiment, there are gaps or cutouts at at least one side and preferably at both (opposing) sides of the self-adhesive tape, which allow easier bending to adapt to a radius of a rim. They are preferably between balancing weights.

A further embodiment relates to a chain or a belt of balancing weights comprising a plurality of balancing weights as disclosed in this document. These are interconnected by the self-adhesive tape.

All the embodiments disclosed herein may be combined in any sequence.

### Description of Drawings

In the following the invention will be described by way of example, without limitation of the general inventive concept, on examples of embodiment with reference to the drawings.
Figure 1 shows a first embodiment of the invention, preferably for steel rims.
Figure 2 shows the first embodiment in a top view.
Figure 3 shows a sectional cut of the first embodiment.
Figure 4 shows an enlarged sectional cut of the first embodiment.
Figure 5 shows an enlarged sectional cut of a second embodiment.
Figure 6 shows a slightly modified embodiment in a sectional view.
Figure 7 shows a further modified embodiment in a sectional view.
Figure 8 shows the embodiment in a second sectional view.
Figure 9 shows the embodiment in the perspective view.
Figure 10 shows a first sectional view of an embodiment with a recess.
Figure 11 shows the embodiment in a second sectional view.
Figure 12 shows the embodiment in the perspective view.
Figure 13 shows a balancing weight of a first embodiment mounted to a rim.
Figure 14 shows the balancing weight on a rim in detail.
Figure 15 shows a chain of balancing weights from the bottom side.
Figure 16 shows a self-adhesive tape with gaps or cutouts.

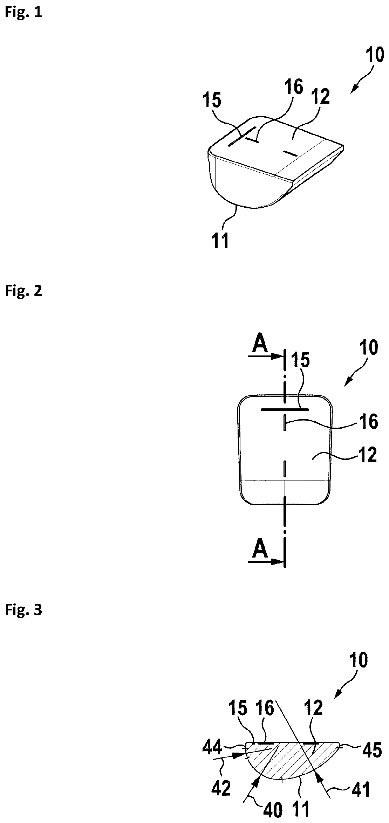

In Figure 1, a first embodiment of the invention, preferably for steel rims is shown. A balancing weight 10 has a top surface 12 and a bottom surface 11 opposing to the top surface. The top surface may bear at least one marking and/or an ornamental design. In this embodiment, there is a first line 15 which shows the orientation of the balancing weight and is approximately parallel to the circumference of the rim; a second line 16, which may be under a right angle and comprises of two dashes in this embodiment, is in a radial direction and points towards the axis of the wheel. The bottom surface 11 has a specific contour to be adapted to a large number of different rims, which will be explained later in detail. For holding the balancing weight for an easy assembly to the rim, the balancing weight may have a first extension 13 and/or a second extension 14.

In Figure 2, the first embodiment is shown in a top view. Here a sectional cut A-A is indicated, which will be shown in detail in the next figure.

In Figure 3, a sectional cut of the first embodiment is shown. This cut is, as indicated in the previous figure, is made along the cutting lines A-A.

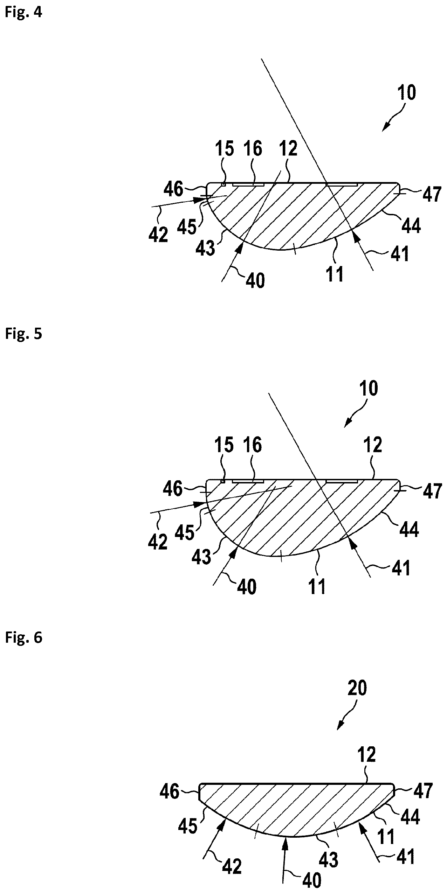

Figure 4 shows a similar sectional cut as a figure 3. For better visibility, this figure has been enlarged versus the previous figures. The bottom surface 11 of the balancing weight has at least a first curved section 43 and a second curved section 44. It is further preferred to have a third curved section 45. These sections are marked in the figure by small perpendicular lines. The first curved section 43 has a first length and a first radius 40. The second curved section 44 has a second length and a second radius 41. The third curved section 45 has a third length and a third radius 42. The length of the radius indicating lines 40, 41, 42 indicate the radius between the arrow and the end of the line. The center axis for each curved section therefore is at the end of the line. Preferably, the center axis for the first radius 40 goes through the balancing weight body, while it is preferred, that the center axis for the second radius 41 is outside of the balancing weight body. In this embodiment, there is a first straight section 46 between the third curved section 45 and the top surface 12, and a second straight section 47 between the second curved section 44 and the top surface 12. There may be a further straight section (not shown in this embodiment) between the first curved section 43 and the second curved section 44 and or a further straight section between the first curved section 43 and the third curved section 45. The both curved sections will result in at least two contact points with the rim of a large variety of balancing weights, which results in a sufficient contact and a sufficient adhesive force to the rim if an adhesive tape is between the balancing weight and the rim. Due to the curves of the curved sections, the distance to the rim in case of any deviations of the form of the rim is slightly decreasing. Such a slightly decreasing distance may easily be absorbed by a self-adhesive tape between the balancing weight and the rim, thus resulting in a comparatively large section in which adhesive forces apply.

Figure 5 shows a slightly different embodiment, where the third radius 42 is larger than the first radius 40, whereas in the previous figure referred radius 42 is smaller than the first radius 40. Different radii may be selected to get the broadest adaption different balancing weights.

Figure 6 shows a slightly modified embodiment of the previous figure with a symmetrical design, where the second radius 41 is equal to the third radius 42. The design of the bottom surface 11 comprising a first radius 40, a second radius 41 and a third radius 42 is adapted to fit to the 25 most common used rims in Europe and to a large number of rims in the US as well as in other countries. It is preferred, to have the radius of the first, second and third curved sections in a range between 4 mm and 12 mm, whereas the radius of the first curved section is between 0.5 and 3 mm smaller than the radius of the second and third curved sections. Most preferably, the radius of the first section is 7 mm, whereas the radius of the second and third sections is 8 mm.

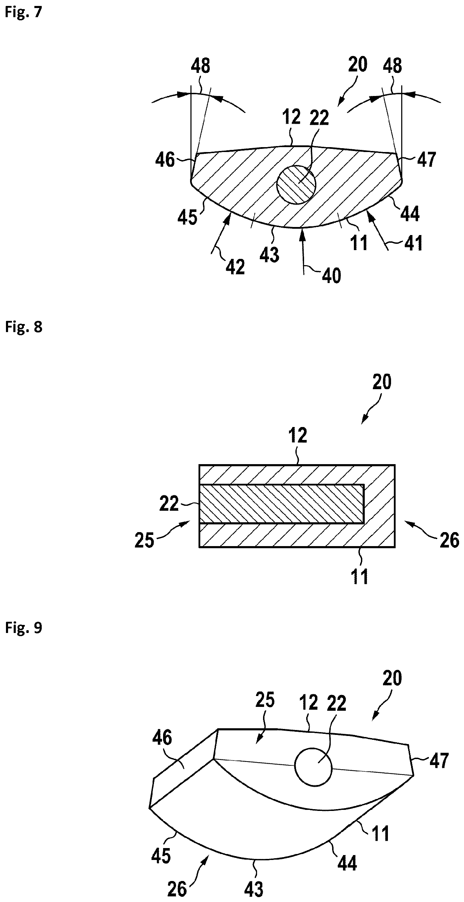

In figure 7 a further embodiment is shown. It is similar to a previous figure, but has larger first and second side walls 46, 47. The sidewalls may be parallel, or they may be under an angle 48 inwards, such that the planes of the sidewalls intersect above the top surface. The larger sidewalls give the balancing weight additional height and therefore volume and mass. They further may allow to include an inlay 22 comprising a ferromagnetic and preferably a soft magnetic material. The purpose of the inlay is an improved handling by a magnetic handling apparatus. Preferred materials of this inlay are iron or steel.

Figure 8 shows a sectional view of the same balancing weight through the center of the inlay. It shows that the inlay is extending from a front side 25 and preferably is flush with the front side. The inlay preferably ends before the rear side 26 opposing the front side 25, such that it does not penetrate through the rear side.

Figure 9 shows a perspective view of the balancing weight with all the features as explained above.

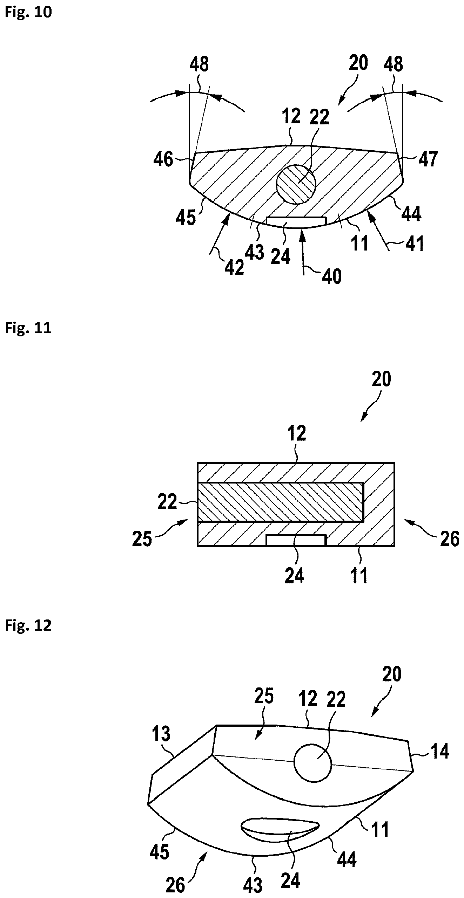

In figure 10 a balancing weight similar to the balancing weight above is shown. Here, at the bottom surface, preferably at the center of the bottom surface, it is preferred to have a recess 24. This recess results in a lower surface area of the first curved section 43. Due to the lower surface area, the total force to compress an adhesive tape located at the first curved section is lower compared to the second and the third section. This helps to adapt the balancing weight to rims, if the shape of the rim is such, that the distance or space between the rim and the first section is less than the distance between the rim and the second and third sections.

Figure 11 is similar to previous figure 8, but with the recess 24.

Figure 12 is similar to previous figure 9, but with the recess 24.

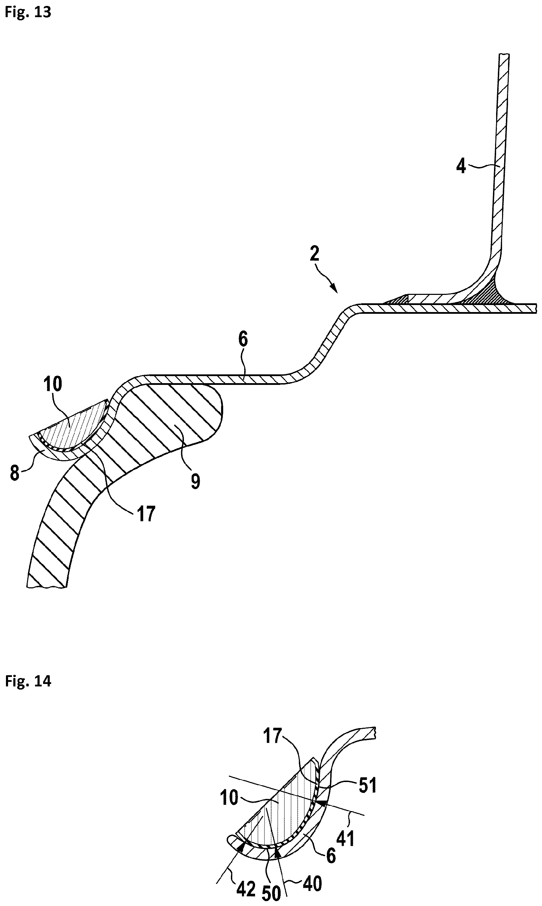

In Figure 13, a balancing weight 10 mounted to a steel rim 2 of a wheel is shown. A wheel rim 2 comprises at least a wheel disk 4 and a wheel band 6 ending in a wheel horn 8, as known from the art. A tire 9 is mounted to the wheel rim 2.

In Figure 14, an enlarged section of a balancing weight on a rim is shown. There is first contact area 50 between the balancing weight and the rim at the first radius 40 or the third radius 42 of the balancing weight. Furthermore, there is a second contact area 51 between the second radius 41 of the balancing weight and the rim. These two contact areas are at some distance to each other and are large enough to hold the balancing weight in a longtime durable position at the rim.

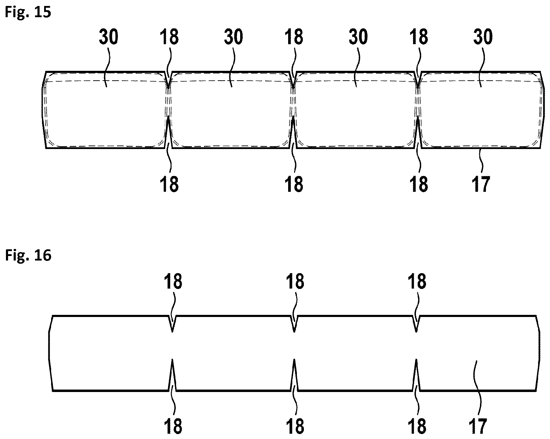

Figure 15 shows a chain of balancing weights from the bottom side. Here, preferably, gaps or cutouts 18 are provided in the self-adhesive tape, which allow easier bending to adapt to a radius of a rim.

Figure 16 shows a preferred embodiment of a self-adhesive tape 17. Here, gaps or cutouts 18 are provided, which may allow easier bending to adapt to a radius of a rim. Such gaps or cutouts may be at one side only or at both sides as shown.

### List of reference numerals

- 2: wheel rim
- 4: wheel disk
- 6: wheel band
- 8: wheel horn
- 9: tire
- 10: balancing weight
- 11: bottom surface
- 12: top surface
- 13: first extension
- 14: second extension
- 15: first line
- 16: second line
- 17: self-adhesive tape
- 18: cutout
- 20: balancing weight
- 22: inlay
- 24: recess
- 25: front side
- 26: rear side
- 30: balancing weight
- 40: first radius
- 41: second radius
- 42: third radius
- 43: first curved section
- 44: second curved section
- 45: third curved section
- 46: first straight section
- 47: second straight section
- 48: side angle
- 50: first contact area
- 51: second contact area

## Claims

1. Self-adhesive balancing weight (10, 20, 30) for a vehicle wheel having a top surface (12) and a bottom surface (11), the bottom surface being an attachment surface with a self-adhesive tape (17),
the bottom surface (11) has a first curved section (43) with a first radius (40), a second curved section (44) with a second radius (41) and a third curved section (45) with a third radius (42),
the self-adhesive tape (17) is on the first curved section (43), on the second curved section (44) and on the third curved section (45),
the first radius (40) is smaller than the second radius (41), and
the first, second and third curved sections are convex shaped.

2. Self-adhesive balancing weight (10, 20, 30) according to claim 1, **characterized in, that**
the self-adhesive tape (17) completely covers the first curved section(43) and the second curved section (44) in a tangential direction and may further cover the third curved section (45) in a tangential direction.

3. Self-adhesive balancing weight (10, 20, 30) according to any one of the previous claims,
**characterized in, that**
the first curved section (43) and the second curved section (44) form at least one contact line with a rim via the self-adhesive tape, when applied to the rim.

4. Self-adhesive balancing weight (10, 20, 30) according to any one of the previous claims,
**characterized in, that**
the center axis of the second radius (41) is outside of the balancing weight (10, 20, 30).

5. Self-adhesive balancing weight (10, 20, 30) according to any one of the previous claims,
**characterized in, that**
at least one straight section (46, 47) is provided between a curved section of the second (44) and third curved section (45) and the top surface (12).

6. Self-adhesive balancing weight (10, 20, 30) according to any one of the previous claims,
**characterized in, that**
an straight section is between the first curved section (43) and the second curved section (44) and/or between the first curved section (43) and the third curved section (45).

7. Self-adhesive balancing weight (10, 20, 30) according to any one of the previous claims,
**characterized in, that**
the first radius (40) is ½ of the second radius (41) or that the first radius (40) is 1/5 of the second radius (41).

8. Self-adhesive balancing weight (10, 20, 30) according to any one of the previous claims,
**characterized in, that**
the first radius (40) is 4 mm and the second radius (41) is 8 mm with a tolerance of these values of ± 50 % and a preferred tolerance of 30% or that the first radius (40) is 1.8 mm and the second radius (41) is 9 mm with a tolerance of these values of ± 50 % and a preferred tolerance of 30% or that the first radius (40) is 1 mm less than the second radius (41) which is 8 mm with a tolerance of these values of ± 50 % and a preferred tolerance of 30%.

9. Self-adhesive balancing weight (10, 20, 30,) according to any one of the previous claims,
**characterized in, that**
the center axis of the first radius (40) goes through the balancing weight (10, 20, 30).

10. Self-adhesive balancing weight (10, 20, 30) according to any one of the previous claims,
**characterized in, that**
the second radius (41) is equal to the third radius (42).

11. Self-adhesive balancing weight (10, 20, 30) according to any one of the previous claims,
**characterized in, that**
the balancing weight comprises at least one insert (22) further comprising a ferromagnetic material.

12. Self-adhesive balancing weight (10, 20, 30) according to any one of the previous claims,
**characterized in, that**
the balancing weight comprises at least one recess (24) at its bottom surface.

13. Chain of balancing weights comprising a plurality of balancing weights (10, 20, 30) according to any one of the previous claims,
**characterized in, that**
the balancing weights are interconnected by the self-adhesive tape (17).

14. Chain of balancing weights according to claim 13,
**characterized in, that**
gaps or cutouts (18) are provided at one or both sides of the self-adhesive tape (17), preferably between balancing weights.

## Patentansprüche

1. Selbstklebendes Auswuchtgewicht (10, 20, 30) für ein Fahrzeugrad mit einer Oberseite (12) und einer Unterseite (11), wobei die Unterseite eine Befestigungsfläche mit einem Selbstklebeband (17) ist,
die Unterseite (11) einen ersten gekrümmten Abschnitt (43) mit einem ersten Radius (40), einen zweiten gekrümmten Abschnitt (44) mit einem zweiten Radius (41) und einen dritten gekrümmten Abschnitt (45) mit einem dritten Radius (42) aufweist, das Selbstklebeband (17) auf dem ersten gekrümmten Abschnitt (43), auf dem zweiten gekrümmten Abschnitt (44) und auf dem dritten gekrümmten Abschnitt (45) ist, der erste Radius (40) kleiner ist als der zweite Radius (41), und
die ersten, zweiten und dritten gekrümmten Abschnitte konvex geformt sind.

2. Selbsthaftendes Auswuchtgewicht (10, 20, 30) nach Anspruch 1,
**dadurch gekennzeichnet, dass**
das Selbstklebeband (17) den ersten gekrümmten Abschnitt (43) und den zweiten gekrümmten Abschnitt (44) in einer tangentialen Richtung vollständig bedeckt und weiterhin den dritten gekrümmten Abschnitt (45) in einer tangentialen Richtung bedecken kann.

3. Selbsthaftendes Auswuchtgewicht (10, 20, 30) nach einem der vorhergehenden Ansprüche,
**dadurch gekennzeichnet, dass**
der erste gekrümmte Abschnitt (43) und der zweite gekrümmte Abschnitt (44) über das Selbstklebeband zumindest eine Kontaktlinie mit einer Felge bilden, wenn sie auf der Felge aufgebracht werden.

4. Selbsthaftendes Auswuchtgewicht (10, 20, 30) nach einem der vorhergehenden Ansprüche,
**dadurch gekennzeichnet, dass**
die Mittelachse des zweiten Radius (41) außerhalb des Auswuchtgewicht s (10, 20, 30) liegt.

5. Selbsthaftendes Auswuchtgewicht (10, 20, 30) nach einem der vorhergehenden Ansprüche,
**dadurch gekennzeichnet, dass**
zumindest ein gerader Abschnitt (46, 47) zwischen einem gekrümmten Abschnitt des zweiten (44) und dritten gekrümmten Abschnitts (45) und die Oberseite (12) vorgesehen ist.

6. Selbsthaftendes Auswuchtgewicht (10, 20, 30) nach einem der vorhergehenden Ansprüche,
**dadurch gekennzeichnet, dass**
ein gerader Abschnitt zwischen dem ersten gekrümmten Abschnitt (43) und dem zweiten gekrümmten Abschnitt (44) und/oder zwischen dem ersten gekrümmten Abschnitt (43) und dem dritten gekrümmter Abschnitt (45) vorgesehen ist.

7. Selbsthaftendes Auswuchtgewicht (10, 20, 30) nach einem der vorhergehenden Ansprüche,
**dadurch gekennzeichnet, dass**
der erste Radius (40) ½ des zweiten Radius (41) ist oder dass der erste Radius (40) 1/5 des zweiten Radius (41) ist.

8. Selbsthaftendes Auswuchtgewicht (10, 20, 30) nach einem der vorhergehenden Ansprüche,
**dadurch gekennzeichnet, dass**
der erste Radius (40) 4 mm und der zweite Radius (41) 8 mm beträgt, mit einer Toleranz dieser Werte von ± 50% und einer bevorzugten Toleranz von 30%, oder dass der erste Radius (40) 1,8 mm und der zweite Radius (41) 9 mm beträgt, mit einer Toleranz dieser Werte von ± 50% und einer bevorzugten Toleranz von 30%, oder dass der erste Radius (40) ist 1 mm kleiner als der zweite Radius (41), der 8 mm beträgt, mit einer Toleranz dieser Werte von ± 50% und einer bevorzugten Toleranz von 30%.

9. Selbsthaftendes Auswuchtgewicht (10, 20, 30) nach einem der vorhergehenden Ansprüche, **dadurch gekennzeichnet, dass**
die Mittelachse des ersten Radius (40) durch das Auswuchtgewicht (10, 20, 30) verläuft.

10. Selbsthaftendes Auswuchtgewicht (10, 20, 30) nach einem der vorhergehenden Ansprüche, **dadurch gekennzeichnet, dass**
der zweite Radius (41) gleich dem dritten Radius (42) ist.

11. Selbsthaftendes Auswuchtgewicht (10, 20, 30) nach einem der vorhergehenden Ansprüche, **dadurch gekennzeichnet, dass**
das Auswuchtgewicht zumindest einen Einsatz (22) umfasst, der weiterhin ein ferromagnetisches Material umfasst.

12. Selbsthaftendes Auswuchtgewicht (10, 20, 30) nach einem der vorhergehenden Ansprüche, **dadurch gekennzeichnet, dass**
das Auswuchtgewicht an seiner Unterseite eine Aussparung (24) umfasst.

13. Auswuchtgewichtekette umfassend eine Vielzahl von Auswuchtgewichten (10, 20, 30) nach einem der vorhergehenden Ansprüche,
**dadurch gekennzeichnet, dass**
die Auswuchtgewichte durch das Selbstklebeband (17) miteinander verbunden sind.

14. Auswuchtgewichtekette nach Anspruch 13,
**dadurch gekennzeichnet, dass**
Lücken oder Ausschnitte (18) an einer oder beiden Seiten des Selbstklebebandes (17), vorzugsweise zwischen Auswuchtgewicht en, vorgesehen sind.

## Revendications

1. Poids d'équilibrage auto-adhésif (10, 20, 30) pour une roue de véhicule ayant une surface supérieure (12) et une surface inférieure (11), la surface inférieure étant une surface de fixation avec une bande auto-adhésive (17),
la surface inférieure (11) a une première section incurvée (43) avec un premier rayon (40), une deuxième section incurvée (44) avec un deuxième rayon (41) et une troisième section incurvée (45) avec un troisième rayon (42),
la bande auto-adhésive (17) est sur la première section incurvée (43), sur la deuxième section incurvée (44) et sur la troisième section incurvée (45),
le premier rayon (40) est plus petit que le deuxième rayon (41), et
les première, deuxième et troisième sections incurvées sont de forme convexe.

2. Poids d'équilibrage auto-adhésif (10, 20, 30) selon la revendication 1,
**caractérisé en ce que**
la bande auto-adhésive (17) couvre totalement la première section incurvée (43) et la deuxième section incurvée (44) dans une direction tangentielle et peut en outre couvrir la troisième section incurvée (45) dans une direction tangentielle.

3. Poids d'équilibrage auto-adhésif (10, 20, 30) selon l'une quelconque des revendications précédentes,
**caractérisé en ce que**
la première section incurvée (43) et la deuxième section incurvée (44) forment au moins une ligne de contact avec une jante via la bande auto-adhésive, lorsqu'elles sont appliquées à la jante.

4. Poids d'équilibrage auto-adhésif (10, 20, 30) selon l'une quelconque des revendications précédentes,
**caractérisé en ce que**
l'axe central du deuxième rayon (41) est en dehors du poids d'équilibrage (10, 20, 30).

5. Poids d'équilibrage auto-adhésif (10, 20, 30) selon l'une quelconque des revendications précédentes,
**caractérisé en ce que**
au moins une section droite (46, 47) est prévue entre une section incurvée des deuxième (44) et troisième section incurvée (45) et la surface supérieure (12).

6. Poids d'équilibrage auto-adhésif (10, 20, 30) selon l'une quelconque des revendications précédentes,
**caractérisé en ce que**
une section droite est entre la première section incurvée (43) et la deuxième section incurvée (44) et/ou entre la première section incurvée (43) et la troisième section incurvée (45).

7. Poids d'équilibrage auto-adhésif (10, 20, 30) selon l'une quelconque des revendications précédentes,
**caractérisé en ce que**
le premier rayon (40) représente la moitié du deuxième rayon (41) ou **en ce que**
le premier rayon (40) représente 1/5 du deuxième rayon (41).

8. Poids d'équilibrage auto-adhésif (10, 20, 30) selon l'une quelconque des revendications précédentes,
**caractérisé en ce que**
le premier rayon (40) est de 4 mm et le deuxième rayon (41) est de 8 mm avec une tolérance de ces valeurs de ± 50 % et une tolérance préférée de 30 % ou
**en ce que** le premier rayon (40) est de 1,8 mm et le deuxième rayon (41) est de 9 mm avec une tolérance de ces valeurs de ± 50 % et une tolérance préférée de 30 % ou
**en ce que** le premier rayon (40) est de 1 mm inférieur au deuxième rayon (41) qui est de 8 mm avec une tolérance de ces valeurs de ± 50 % et une tolérance préférée de 30 %.

9. Poids d'équilibrage auto-adhésif (10, 20, 30) selon l'une quelconque des revendications précédentes,
**caractérisé en ce que**
l'axe central du premier rayon (40) traverse le poids d'équilibrage (10, 20, 30).

10. Poids d'équilibrage auto-adhésif (10, 20, 30) selon l'une quelconque des revendications précédentes,
**caractérisé en ce que**
le deuxième rayon (41) est égal au troisième rayon (42).

11. Poids d'équilibrage auto-adhésif (10, 20, 30) selon l'une quelconque des revendications précédentes,
**caractérisé en ce que**
le poids d'équilibrage comprend au moins un insert (22) comprenant en outre un matériau ferromagnétique.

12. Poids d'équilibrage auto-adhésif (10, 20, 30) selon l'une quelconque des revendications précédentes,
**caractérisé en ce que**
le poids d'équilibrage comprend au moins un évidement (24) au niveau de sa surface inférieure.

13. Chaîne de poids d'équilibrage comprenant une pluralité de poids d'équilibrage (10, 20, 30) selon l'une quelconque des revendications précédentes,
**caractérisée en ce que**
les poids d'équilibrage sont reliés par la bande auto-adhésive (17).

14. Chaîne de poids d'équilibrage selon la revendication 13,
**caractérisée en ce que**
des écartements ou des découpes (18) sont prévus au niveau d'un côté ou des deux côtés de la bande auto-adhésive (17), de préférence entre des poids d'équilibrage.
